# EUROPÄISCHE PATENTANMELDUNG

(11) **EP 2 654 011 A1**
(43) Veröffentlichungstag der Anmeldung: **23.10.2013**
(21) Anmeldenummer: 12165050.1
(22) Anmeldetag: 20.04.2012
(51) Int. Cl.: G06Q 30/06

(54) **System zur visuellen Informationsanzeige und zur Datenkommunikation**

(71) Anmelder: Mirror Image AG, 9323 Steinach (CH)
(72) Erfinder: Röttcher, Oliver, 78269 Volkertshausen (DE)
(74) Vertreter: Behrmann, Niels

(57) **Zusammenfassung**

Die Erfindung betrifft ein System zur visuellen Informationsanzeige und zur Datenkommunikation betreffend die angezeigten visuellen Informationen mit einer elektronischen, als Reaktion auf eine Ansteuerung durch eine erste Servereinheit (28) die visuellen Informationen für einen Betrachter darstellenden Anzeigeeinheit (24),mindestens einer mobilen, insbesondere manuell handhabbaren Datenverarbeitungseinheit (10) mit Bildaufnahmemitteln (18), die zum optischen Abtasten der visuellen Informationen als Reaktion auf eine Betätigung durch den Betrachter zum Erzeugen von informationsspezifischen Codierungsdaten aus den abgetasteten visuellen Informationen und zum Übertragen der Codierungsdaten an eine zweite Servereinheit (22) über ein drahtloses öffentliches Datenübertragungsnetz (20), insbesondere ein öffentliches Mobilfunknetz, ausgebildet ist,wobei die zweite Servereinheit Mittel (32) zur Identifikation des Betrachters und zum Zuordnen von betrachterindividualisierenden Daten zu den informationsspezifischen Codierungsdaten aufweist und so ausgebildet ist, dass eine der zweiten Servereinheit nachgeschaltete Transaktionseinheit (34) auf der Basis der betrachterindividualisierenden Daten sowie der informationsspezifischen Codierungsdaten eine betrachterspezifische Transaktion, insbesondere Bezahlungstransaktion, durchführen kann.

## Beschreibung

Die vorliegende Erfindung betrifft ein System zur visuellen Informationsanzeige sowie zur Datenkommunikation betreffend die angezeigten visuellen Informationen.

Aus dem Stand der Technik ist es bekannt, mit Hilfe von (im privaten oder öffentlichen Umfeld aufgestellten) Monitoren oder dergleichen elektronischen Anzeigeeinheiten verschiedenster Arten von Informationen statisch oder dynamisch darzustellen, wobei zunehmend derartige Informationen digital von entfernt ("remote") vorliegenden Servereinheiten bereitgestellt werden. Derartige visuelle Informationen, typischerweise basierend auf digitalen Dokumenten, können dabei sowohl aktuelle visuelle (bzw. audio-visuelle) Medienwiedergaben sein, als auch Wiedergaben von Webseiten, von Spielen, von Büchern oder dergleichen typischerweise digital vorliegendem Inhalt ("Content").

Aus dem Stand der Technik ist es ferner bekannt, mit Hilfe von mobilen, typischerweise portablen Datenverarbeitungseinheiten auf elektronische Inhalte über drahtlose (üblicherweise öffentliche) Datenübertragungsnetze zuzugreifen, wobei sich die Nutzung der öffentlichen Mobilfunknetze für derartige Zwecke zunehmend etabliert.

Ferner ist es als zum Stand der Technik gehörig vorauszusetzen, dass derartige mobile Einheiten zum Zweck einer vereinfachten Bedienung, Navigation und Informationserfassung mit geeigneten Bildaufnahmemitteln (etwa integrierten Kameras) versehen sind, welche durch eine Bedienperson (Benutzer) der mobilen Einheit auf eine Informationsanzeige gerichtet werden und durch Abtasten dieser Anzeige dann einen diesem Inhalt entsprechenden digitalen Datenstrom erzeugen können. Dabei ist es zum einen als aus dem Stand der Technik bekannt vorauszusetzen, dass derartige Bildaufnahmemittel an mobilen Datenverarbeitungseinheiten mit zugehöriger Steuersoftware so ausgestaltet sind, dass etwa eine Identifikation des abgetasteten Bildes allein aufgrund der zugehörigen Bilddaten möglich ist; beispielhaft sei etwa das Abtasten von Buchtiteln mit derartigen Bildaufnahmemitteln genannt, welche nachfolgend im mobilen Gerät nicht nur in eine konkrete bibliografische Identifikation des Buches umgesetzt werden können, sogar ermöglicht es dann die mobile Datenverarbeitungseinheit, über das öffentliche Datenübertragungsnetz geeignete produktspezifische Informationen heranzuführen.

Zum anderen ist es als aus dem Stand der Technik bekannt vorauszusetzen, mit derartigen Einheiten geeignete Codes bzw. Codemuster durch optisches Abtasten zu erfassen, wobei diese Codemuster dann typischerweise eine über das öffentliche Datenübertragungsnetz zugreifbare Adresse eines Inhaltsanbieters kennzeichnen, so dass allein auf der Basis eines Abtast- und Auswertevorgangs einer solchen Codierung (bekannt sind etwa die zweidimensionalen sogenannten QR-Codierungen) dann ein Zugriff auf eine geeignete Servereinheit als Informationsprovider erfolgen kann.

All diese Ansätze ermöglichen ein zunehmend komfortables, variables und situationsabhängiges Aufnehmen verschiedenster, visuell erkennbarer Information, wobei dann die typischerweise entweder der manuell handhabbaren Datenverarbeitungseinheit unmittelbar zugeordnete, ergänzend oder alternativ mittelbar über eine angebundene Servereinheit zugeordneten Auswerteeinheiten geeignete Verbindungen zu netz- bzw. serverbasiertem Inhalt herstellen.

Allerdings sind derartige Technologien, welche einen Navigationsvorgang als Reaktion auf entsprechende abgetastete visuelle Informationen auslösen, primär passiv, d.h. sie ermöglichen nicht ohne weiteres das vollständige Abbilden und Durchführen von Transaktionsvorgängen, bei welchen der Benutzer und Betrachter der visuellen Informationen eine aktive Rolle spielen soll, etwa beim Erwerb einer mittels dieser Technologien beworbenen Ware: So ist es etwa bei aus dem Stand der Technik als bekannt vorauszusetzenden QR-Erfassungstechnologien möglich, mit einem Smartphone oder dergleichen manuell handhabbarem Datenverarbeitungsgerät derartige, z.B. an öffentlichen Plakatwänden gezeigte Codierungen abzutasten und als Reaktion darauf auf eine entsprechend zugehörige Internetadresse zuzugreifen, weitergehende Transaktionen machen jedoch danach erst aktives Tätigwerden des Benutzers notwendig, wie etwa das Durchführen der jeweils anbieterspezifischen Transaktionsvorgänge (etwa das darauffolgende Kaufen der beworbenen Ware), indem der durch die Adresse gekennzeichnete Webshop in ansonsten bekannter Weise betreten und eine Kauf- und Bezahltransaktion nach erfolgter Identifikation durchgeführt wird.

Dies ist insbesondere in Zeiten schwankender Kundenaufmerksamkeit, kurzen Bedürfniserzeugungs- und Befriedigungszyklen von digital angesprochenen Kunden und einem zunehmenden Trend zu spontanen Entscheidungen potenziell nachteilig, denn es ist zu befürchten, dass gewisse Transaktionen (welche grundsätzlich Nachfrage des betroffenen Betrachters und Benutzers der manuellen Datenverarbeitungseinheit erzeugen), allein deswegen nicht durchgeführt werden, weil dieser die nachfolgenden Schritte in der Vorbereitung und Durchführung der Kauftransaktion scheut.

Aufgabe der vorliegenden Erfindung ist es daher, ein System zur visuellen Informationsanzeige und zur Datenkommunikation betreffend die angezeigten visuellen Informationen zu schaffen, welche insbesondere im Hinblick auf das Abbilden auch komplexer Transaktionsvorgänge, wie etwa Kauf- und Vergütungstransaktionen (in welche der Betrachter bzw. Benutzer aktiv identifiziert einbezogen sein muss) mit deutlich verringertem Aufwand zu ermöglichen, dabei insbesondere den notwendigen Bedien- und Betätigungsaufwand für den Benutzer soweit herabzusetzen, dass dieser unverzüglich als Reaktion auf das Abtasten der visuellen Informationen und des Durchführens des damit verbundenen Navigationsvorgangs bereit ist, eine ihm darüber angebotene Transaktion durchzuführen.

Die Aufgabe wird durch das System zur visuellen Informationsanzeige mit den Merkmalen des Hauptanspruchs gelöst; vorteilhafte Weiterbildungen der Erfindung sind in den Unteransprüchen beschrieben. Während zudem die vorliegende Erfindung primär als Erzeugnis und System beansprucht wird, sollen gleichwohl solche Verfahrensmerkmale, welche die Abwicklung bzw. den Betrieb des erfindungsgemäßen Systems betreffen und aus den Anmeldungsunterlagen ersichtlich sind, im Rahmen der vorliegenden Erfindung als zur Erfindung gehörig offenbart und beansprucht gelten.

In erfindungsgemäß vorteilhafter Weise besitzt die zweite Servereinheit Mittel zur Identifikation des Betrachters sowie zum Zuordnen von betrachterindividualisierenden Daten zu den informationsspezifischen Codierungsdaten, welche (in ansonsten bekannter Weise etwa mittels einer QR-Erfassung und - Decodierung) der Benutzer von einer (typischerweise etwa öffentlich erreichbaren) Bildanzeigeeinheit abtastet. Dies führt dann dazu, dass, abweichend von gängigen QR-Verarbeitungs- und Geschäftsmodellen, der Benutzer nicht in der Art eines Routers lediglich zu dem entsprechenden Informationsanbieter geleitet wird, und dort dann anbieterspezifisch jeweilige Prozeduren durchlaufen muss, um etwa eine Kauftransaktion und dergleichen komplexe (die Benutzer einschließenden) Transaktionen durchzuführen, vielmehr ermöglichen es die der zweiten Servereinheit zugeordneten Identifikationsmittel, dass bei entsprechendem Serverkontakt der manuell handhabbaren Datenverarbeitungseinheit mit den Bildaufnahmemitteln (etwa realisiert durch ein Smartphone) ein jeweiliges, durch das Abtasten und nachfolgende Auflösen bzw. Decodieren der visuellen Information ermöglichtes Navigieren des Betrachters (Benutzers) zu serverseitigen Adressen stets im Rahmen einer konkreten Nutzeridentifikation erfolgen kann. Entsprechend ermöglicht es erfindungsgemäß die der zweiten Servereinheit nachgeschaltete Transaktionseinheit, dass auf der Basis der betrachterindividualisierenden Daten sowie der (aus dem abgetasteten Bildmuster gewonnenen) informationsspezifischen Codierungsdaten eine betrachterspezifische Transaktion unmittelbar durchgeführt werden kann, also etwa ein einer Datenübertragung zugrundeliegendes Angebot eines Kaufobjekts nachfolgend im Rahmen einer Kauftransaktion durch den Benutzer erworben und vergütet werden kann, ohne dass es potenziell gesonderter Identifikations- und/oder Bezahlungsschritte (über ein typischerweise notwendiges Bestätigen der Kaufabsicht oder dergleichen Bestätigungsvorgang hinaus) bedarf.

Eine derartige Vorgehensweise ist ersichtlich vorteilhaft und ermöglicht komfortables Navigieren durch den Benutzer (ohne dass etwa erhöhte Gefahr von Datenmissbrauch oder dergleichen besteht), denn aufgrund der erfindungsgemäßen, mittels bekannter drahtloser Technologien realisierten Anbindung zwischen der mobilen Datenverarbeitungseinheit und der zweiten Servereinheit besteht ein gegen missbräuchliche externe Zugriffe gesichertes Umfeld, welches gleichzeitig den für den Benutzer vorteilhaften Komfort ermöglicht, gezielt und identifiziert jeweils ihm angebotene digitale Dienstleistungen in Anspruch zu nehmen, ohne die Notwendigkeit zusätzlicher, anbieter- bzw. dienstleistungsspezifischer Identifikationsschritte.

Zusätzlich vorteilhaft ist dieses Prinzip für den die zweite Servereinheit mit ihren Aggregaten betreibenden Dienstanbieter, denn es ist zu erwarten, dass für verbundene, über diese Infrastruktur Produkte oder Dienstleistungen anbietende Partner eindeutig höherwertigeres Nutzerverhalten vorliegt, einerseits in potenziell höheren Kauf- bzw. Transaktionsquoten, andererseits in der Möglichkeit, aus den betrachterindividualisierenden Daten (bzw. wiederum aus diesen zu gewinnenden Profil- bzw. Historiendaten) Anhaltspunkte über attraktive Angebote, Zielmarketing oder dergleichen zu gewinnen.

In einem möglichen Anwendungsszenario könnte daher das erfindungsgemäße System etwa wie folgt betrieben werden: Ein Waren- oder Dienstleistungsanbieter stellt über die erste Servereinheit und die damit verbundene Anzeigeeinheit, etwa einen Bildschirm im öffentlichen Raum, das Angebot zur Betrachtung durch den (etwa zufällig anzusprechenden) Benutzer dar. Bei Interesse tastet dieser mit Hilfe seiner mobilen Datenverarbeitungseinheit und deren Bildaufnahmemitteln die visuellen Informationen ab (greift etwa auf einen geeignet gekennzeichneten Codeabschnitt im angezeigten Bild zu), woraufhin dann der Betrachter über das öffentliche Datenübertragungsnetz verbunden ist/wird mit der zweiten Servereinheit, welche den Betrachter durch die Identifikationsmittel konkret identifiziert und die serverseitig übertragenen, dem abgetasteten angezeigten Bild entsprechenden Codierungsdaten diesen benutzer- bzw. betrachterindividualisierenden Daten zuordnen kann. Mit Hilfe dieser Kombination kann dann entweder ein Zugriff auf weitere Inhalte des Waren- bzw. Dienstleistungsanbieters erfolgen (etwa weitergeleitet zu einer weiteren Servereinheit) ergänzend oder alternativ kann bereits unmittelbar eine angebotsspezifische Transaktion ausgelöst werden, wie etwa das wiederum benutzerseitige Laden eines digitalen Medienstücks (Musik- und/oder Video), oder dergleichen Funktion.

Auch lässt sich etwa das ansonsten aus der physischen Welt bekannte Modell eines Gutscheins bzw. Coupons auf einfache Weise abbilden; hier würde etwa in der abgetasteten visuellen Information ein derartiger Coupon (bzw. eine zugehörige Rabatt- und Anbieterinformation des Produkts) liegen, und der Benutzer könnte dann über den Kontakt zur zweiten und/oder ersten Servereinheit bereits unmittelbar eine diese Gutscheinfunktion ausnutzende Transaktion tätigen. Wiederum ergänzend oder alternativ könnte über eine solche Gutscheinfunktion eine (mit dem Gutscheinanbieter selbst oder einem beliebigen Drittanbieter zu tätigende) Transaktion geeignet gefördert, rabattiert oder auf andere Weise benutzerspezifisch beeinflusst werden. Im praktischen Betrieb würde der Benutzer einen solchen Coupon als Anzeigeobjekt auf einem Display der mobilen Datenverarbeitungseinheit zur Bestätigung erhalten.

Besonders günstig ist es im Rahmen bevorzugter Ausführungsformen der Erfindung, wenn die erfindungsgemäße, der zweiten Servereinheit nachgeschaltete Transaktionseinheit Mittel zur Informationswidergabe bzw. Informationsübertragung aufweist, welche etwa für den Umgang mit digitalen Dokumenten (digitalen Medien aller denkbaren Art, eingeschlossen audio-, audio-visuelle, Spiele - und Textmedien) ausgebildet sind. Diese ermöglichen es dann beispielsweise, auf einem geeignet vorzugebenden Ort bzw. bei einem geeignet anzusprechenden Datenübertragungsnetzteilnehmer das zugehörige elektronische Dokument darzustellen, wobei zusätzlich weiterbildend dies etwa auch dadurch geschehen kann, dass dem Benutzer (Betrachter) dann clientseitig auf die manuell-handhabbare Datenverarbeitungseinheit ein entsprechender digitaler Inhalt zur Betrachtung zur Verfügung gestellt wird. Ergänzend oder alternativ ist es günstig und im Rahmen der Erfindung vorgesehen, dass auch auf der von dem Benutzer abzutastenden (bzw. bereits abgetasteten) Anzeigeeinheit ein derartiger Inhalt eines elektronischen Dokuments, etwa als Reaktion auf den zugehörigen Transaktionsvorgang, dargestellt wird.

Auf diese Weise kann dann dem Betrachter in der Art einer unmittelbaren Rückwirkung verdeutlicht werden, dass er die gewünschte Transaktion erfolgreich abgeschlossen hat, wobei dies wiederum mit beliebigen, auch benutzerindividualisierenden Mitteln geschehen kann.

Besonders bevorzugt eignen sich all diese Verwendungsformen für solche Inhalte und elektronischen Dokumente als Gegenstand von Transaktionen, welche eine typische Nutzerbeschränkung (und damit der Notwendigkeit, den Benutzer zu individualisieren und zu identifizieren) bedingen. Gleichzeitig ist die vorliegende Erfindung nicht auf die Handhabung digitaler Inhalte bzw. Informationen beschränkt, sondern eignen sich für jegliche, auch physische Transaktionsgüter, deren Behandlung im Rahmen geeigneter Betrachtungs-, Test-, Kauf, Leih- oder (virtueller) Erprobungstransaktionen zum Gegenstand von Interaktionen mit einem Benutzer und (aktuellen oder zukünftigen) Transaktionspartner im erfindungsgemäßen Kommunikationskontext gemacht werden kann.

Dabei ist es im Rahmen der vorliegenden Erfindung prinzipiell möglich, nahezu jeden beliebigen Anzeigeinhalt als visuelle Information dem optischen Abtasten und damit der nachfolgenden Verarbeitung und Verknüpfung mit den betrachterindividualisierenden Daten zugänglich zu machen. Gleichwohl ist es, insoweit anlehnend an die als bekannt vorausgesetzte QR-Technologie, im Rahmen bevorzugter Weiterbildungen der Erfindung bevorzugt, einen derartigen abzutastenden Bereich lediglich als Teil der Anzeigeeinheit gezielt für die Codierung auszugestalten, um somit, neben einer Optimierung der Zuverlässigkeit, auch implizite Bedienungshinweise an den Benutzer zu geben (da davon auszugehen ist, dass sich Bedienungsmodi analog QR zunehmend durchsetzen und im Alltag etablieren werden).

Um eine ordnungsgemäße und zuverlässige Funktionsfähigkeit des erfindungsgemäßen System zu ermöglichen, welches typischerweise für eine Vielzahl von clientseitigen, manuell handhabbaren Datenverarbeitungseinheiten mit jeweils zugehörigem Betrachter vorgesehen und ausgebildet ist, ist es notwendig, nicht nur bereits registrierte Betrachter (Benutzer) geeignet zu verwalten bzw. diese zu identifizieren, auch muss neuen Betrachtern (Benutzern) die Möglichkeit gegeben werden, sich effizient dem System anzuschließen und so die geschilderten Vorteile nutzen zu können. Zu diesem Zweck ist weiterbildungsgemäß dem System bevorzugt clientseitig eine manuell betätigbare Eingabeschnittstelle zugeordnet, welche, neben geeigneten Bedienungsvorgängen im operativen Betrieb, insbesondere auch das Registrieren des betreffenden (neuen) Betrachters/Benutzers im Rahmen des Systems ermöglicht und eine Ablage von entsprechenden Daten in einer geeigneten, der zweiten Servereinheit zugeordneten Verwaltungseinheit zugänglich macht. Zu diesem Zweck können einerseits geeignete (mobil bedienbare) Masken im Rahmen einer APP-Anwendung geschaffen sein, ergänzend oder alternativ kann eine Verknüpfung mit bereits in systemexternen Serversystemen vorhandenen Benutzer/Betrachterdaten erfolgen, wie etwa eine datenmäßige Verbindung zu geeigneten sozialen Netzwerk-Servern oder dergleichen Infrastruktur, insbesondere mit dem Zweck, einem Neu-Benutzer den Systemzugang möglichst einfach und wenig aufwendig zu gestalten.

In der konkreten Realisierung insbesondere von elektronischen Einkaufs- bzw. Handelssystemen ist es bevorzugt, die erfindungsgemäße, der zweiten Servereinheit nachgeschalteten Transaktionseinheit zur Durchführung von Bezahlungstransaktionen mit vorteilhaft weiterbildungsgemäß vorgesehenen Bezahlungstransaktionsmitteln zu versehen. Mit diesen kann, im einfachsten Fall, der geeignet identifizierte Betrachter/Benutzer durch einfache Bestätigung die gewünschte Transaktion, etwa eine Bezahlung eines jeweils ihm angebotenen Gutes, durchführen. Ergänzend oder alternativ können Bezahlungsvarianten oder einem jeweiligen Geschäftsmodell entsprechende Bedienmodi, wie etwa das Abgeben eines Gebots oder dergleichen, ausgewählt und getätigt werden.

Weiterbildungsgemäß und vorteilhaft im Rahmen der Erfindung ist es zudem vorgesehen, jeweiligen Anzeigeeinheiten bzw. von diesen angesprochene bzw. verknüpfte Angebote mit Lokalisierungsdaten zu versehen, welche zusätzlich dem Benutzer als Grundlage für eine Auswahltransaktion angeboten werden; so kann etwa beispielhaft als Reaktion auf ein von der Anzeigeeinheit angezeigtes Restaurantangebot dem Betrachter im Rahmen der Transaktion eine Information über jeweils in der Nähe gelegene Restaurantstandorte gegeben werden (wobei dies dann zusätzlich weiterbildungsgemäß bedingt, dass auch über geeignete client- bzw. mobilgeräteseitige Lokalisierungsmittel ein aktueller Standort des Betrachters bekannt ist).

Während die Vorteile der vorliegenden Erfindung sich insbesondere darin zeigen, dass bereits zum Zeitpunkt des Zugriffs- bzw. Navigationsvorgangs als Reaktion auf das erfindungsgemäße Abtasten der Betrachter/Benutzer identifiziert ist und entsprechend kurzfristig geeignete (spezifische) Transaktionen auslösen kann, sind gleichwohl Umstände bzw. Betriebsmodi denkbar (und im Rahmen bevorzugter Ausführungsformen einstellbar und angeboten), bei welchen etwa der Betrachter entscheidet, passiv, nicht identifiziert (und in ansonsten bekannter Weise, etwa im Rahmen eine QR-Infrastruktur) auf Inhaltsangebote eines (Dritt-) Servers zuzugreifen, ohne dass hiermit konkrete, weitergehende Transaktionen verbunden sind.

Im Ergebnis ermöglicht es somit die vorliegende Erfindung in überraschend einfacher und eleganter Weise, die Möglichkeiten einer bildgestützten, bzw. bildabtastungs-basierten Navigation mit Hilfe von manuell handhabbaren Datenverarbeitungseinheiten signifikant zu verbreitern, dabei sowohl den Nutzen durch den Betrachter (die Bedienperson) durch Komforterhöhung zu verbessern, als auch einen mehrdimensionalen Nutzenvorteil für die weiteren, an der Transaktion beteiligten Netzpartner zu erhöhen.

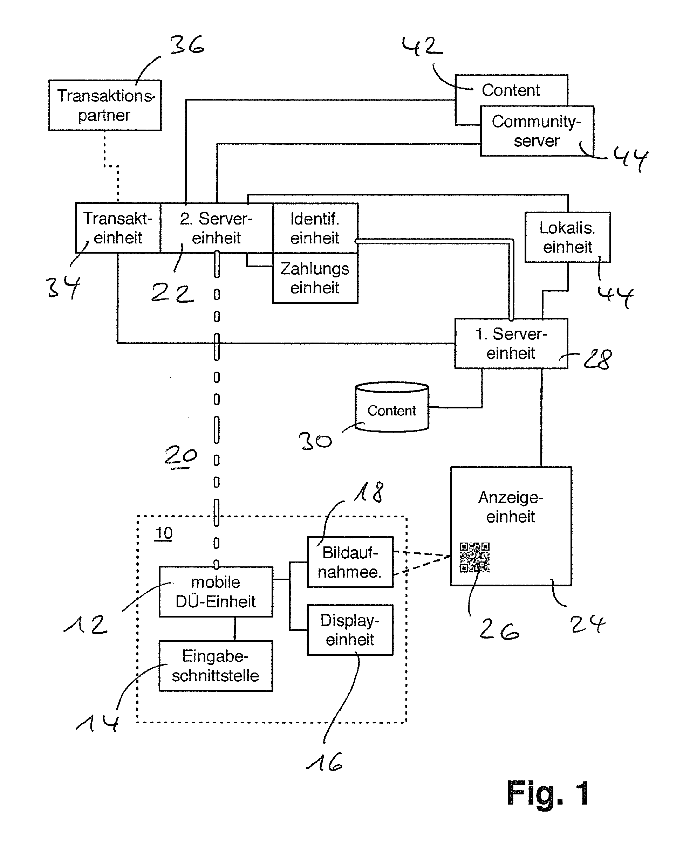

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: ein schematisches Blockschaltbild mit wesentlichen Funktionseinheiten des Systems zur visuellen Funktionsanzeige und zur Datenkommunikation betreffend die angezeigten visuellen Informationen gemäß einem ersten bevorzugten Ausführungsbeispiel der Erfindung.

Die Fig. 1 verdeutlicht zunächst, wie eine mobile, manuell handhabbare Datenverarbeitungseinheit 10, realisiert etwa in Form eines handelsüblichen Smartphones und beinhaltend eine ansonsten bekannte mobile Datenübertragungs- (DÜ-) Einheit 12, eine Eingabeschnittstelle 14, eine Displayeinheit 16 sowie eine Bildaufnahmeeinheit 18 über ein öffentliches Datenübertragungsnetz 20 in Form eines Mobilfunknetzes mit einer angebunden Servereinheit (zweiten Servereinheit 22) zusammenwirkt. Genauer gesagt ist die geeignet konfigurierte, etwa mit einer zugehörigen Programmierung versehene Datenverarbeitungseinheit 10 so ausgebildet, dass mittels der Bildaufnahmeeinheit 18 (geeignet realisiert etwa als CCD-Kameraeinheit mit nachgeschalteter Bildauswertung) das Bild einer geeignet öffentlich oder privat aufgestellten Anzeigeeinheit 24 durch Abfotografieren abgetastet werden kann. Im dargestellten Ausführungsbeispiel ist das Nutzbild der Anzeigeeinheit 24 in einem Teilbereich versehen mit einem Codierungsmuster 26 in der Art eines zweidimensionalen Barcode-Musters, welches insbesondere eine nachgeschaltete digitale Erfassung und Auswertung durch die Bildaufnahmeeinheit 18 bzw. die mobile Datenübertragungseinheit 12 vereinfacht. Auch ist die typischerweise einen Flachbildschirm aufweisende Anzeigeeinheit 24 bevorzugt mit einer Benutzer- und/oder Bedienschnittstelle, etwa in Form eines die Anzeige aktivierenden oder beeinflussenden Anwesenheits- oder Bewegungssensors versehen, insoweit kann damit auch der Anzeigebetrieb auf den (sich z.B. im Sichtfeld befindenden) Benutzer reagieren, etwa mit einer visuellen oder akustisch gegebenen Aufforderung, in der erfindungsgemäßen Weise das Anzeigebild abzutasten.

Der auf der Anzeigeeinheit 24 darzustellende Inhalt wird bereitgestellt von einer ersten Servereinheit 28 bzw. einer damit zusammenwirkenden Inhaltsspeichereinheit 30, welche beliebige elektronische Dokumente oder dergleichen Inhalte ("Content") zur Anzeige bereithält, wobei diese Inhalte dann durch die erste Servereinheit mit der geeigneten Codierung 26 versehen werden.

Die zweite Servereinheit, verbunden mit der mobilen Datenverarbeitungseinheit 10 über das Mobilfunknetz 20, weist zunächst eine Identifikationseinheit 32 auf, welche entsprechend von der Einheit 10 empfangene Codedaten einem zugehörigen Betrachter/Benutzer zuordnet, insbesondere durch betrachterindividualisierende Daten (aus einer nicht gezeigten Benutzer- bzw. Betrachterspeichereinheit der zweiten Servereinheit 22 bzw. der Identifikationseinheit 32).

Der zweiten Servereinheit zugeordnet ist ferner eine Transaktionseinheit 34, welche auf der Basis der von der mobilen Einheit 10 empfangenen, Anzeige-Inhatsspezifischen (24) Daten sowie der benutzeridentifizierenden Daten (32) eine geeignete Transaktion mit einem lokal oder remote angebundenen Transaktionspartner 36 auslösen kann, etwa eine Kauftransaktion betreffend ein jeweils mit dem digitalen Inhalt angebotenes Produkt, ggf. zusätzlich unterstützt durch einen Gutschein oder dergleichen Rabattinstrument. Um insoweit eine Vergütung durch den (identifizierten und individualisierten) Betrachter/Benutzer sicherzustellen, ist der zweiten Servereinheit bzw. der Identifikationseinheit eine Zahlungseinheit 38 zugeordnet, welche etwa zuzugreifende Zahlungsinformationen (Kreditkartendaten, Daten extern angebundener bzw. anzubindender Zahlungsdienstleister oder andere monetäre Informationen) bereitstellt und deren Nutzung autorisiert.

Koordiniert wird die Funktionalität der Transaktionseinheit 34 im Zusammenwirken mit der ersten Servereinheit 28 (als Auslöser bzw. Bereitsteller der auf der Anzeigeeinheit 24 dargebotenen Information), so dass insoweit größtmögliche Flexibilität in der Ausgestaltung besteht. Während zudem im dargestellten Ausführungsbeispiel die zweite Servereinheit 22 und die erste Servereinheit 28 als verschiedene Entitäten dargestellt sind, sind gleichwohl Realisierungsformen der Erfindung möglich und von der Erfindung umfasst, bei welchen eine gemeinsame Servereinheit die Funktionalitäten der ersten und der zweiten Servereinheit realisiert.

Zusätzlich die Flexibilität des Systems erhöhend, ist der ersten und der zweiten Servereinheit eine Lokalisierungseinheit 40 zugeordnet, welches einem jeweils dargestellten Angebot (den angebotenen Informationen) zugehörige Lokalisierungsdaten speichert und anbietet, auch hier kann der Zugriff dann geeignet flexibel erfolgen.

Schließlich ist es bei dem gezeigten Ausführungsbeispiel möglich, zusätzlichen (ggf. auch nicht identifizierend anzusprechenden) digitalen Inhalt einer weiteren Servereinheit 42 ("Content"-Server) etwa durch entsprechende Auswahl des Betrachters im Rahmen der Eingabe auszuwählen (insoweit entsprechend einer traditionellen, etwa QR-basierten Navigation) und/oder Nutzerdaten bzw. Transaktionsdaten im Austausch mit externen Server- bzw. Benutzersystemen, beispielhaft einem Community-Server 44 (z.B für das Facebook-System) auszutauschen, womit dann etwa der Benutzer seine benutzerindividualisierenden Daten unmittelbar von der Servereinheit 44 beziehen kann und/oder geeignet im Rahmen der Community-Infrastruktur zu publizierende Informationen dieser Servereinheit 44 über die zweite Servereinheit 22 bereitstellen kann.

Die vorliegende Erfindung ist nicht auf das gezeigte Ausführungsbeispiel bzw. die dort lediglich exemplarisch gezeigte Konfiguration beschränkt. Auch sind die dargestellten, primär als Kauf beschriebenen Transaktionen nicht die abschließende Funktionalität der erfindungsgemäßen Transaktionseinheit, vielmehr erstreckt sich diese auf beliebige Funktionalitäten, welche sich durch die beschriebene betrachter- bzw. benutzerindividualisierende Navigation unterstützen lassen.

## Patentansprüche

1. System zur visuellen Informationsanzeige und zur Datenkommunikation betreffend die angezeigten visuellen Informationen mit
einer elektronischen, als Reaktion auf eine Ansteuerung durch eine erste Servereinheit (28) die visuellen Informationen für einen Betrachter darstellenden Anzeigeeinheit (24),
mindestens einer mobilen, insbesondere manuell handhabbaren Datenverarbeitungseinheit (10) mit Bildaufnahmemitteln (18), die zum optischen Abtasten der visuellen Informationen als Reaktion auf eine Betätigung durch den Betrachter zum Erzeugen von informationsspezifischen Codierungsdaten aus den abgetasteten visuellen Informationen und zum Übertragen der Codierungsdaten an eine zweite Servereinheit (22) über ein drahtloses öffentliches Datenübertragungsnetz (20), insbesondere ein öffentliches Mobilfunknetz, ausgebildet ist,
wobei die zweite Servereinheit Mittel (32) zur Identifikation des Betrachters und zum Zuordnen von betrachterindividualisierenden Daten zu den informationsspezifischen Codierungsdaten aufweist und so ausgebildet ist, dass eine der zweiten Servereinheit nachgeschaltete Transaktionseinheit (34) auf der Basis der betrachterindividualisierenden Daten sowie der informationsspezifischen Codierungsdaten eine betrachterspezifische Transaktion, insbesondere Bezahlungstransaktion, durchführen kann.

2. System nach Anspruch 1, **dadurch gekennzeichnet, dass** die Transaktionseinheit eine Informationswiedergabe- und/oder -Übertragungseinheit aufweist, welche als Reaktion auf die betrachterindividualisierenden Daten sowie die informationsspezifischen Codierungsdaten einen betrachterspezifischen Wiedergabe- bzw. Übertragungsbetrieb durchführt.

3. System nach Anspruch 2, **dadurch gekennzeichnet, dass** die Informationswiedergabe- bzw. -Übertragungseinheit zum Ausgeben und/oder Darstellen eines elektronischen Dokuments an die mobile Datenverarbeitungseinheit und/oder an die elektronische Anzeigeeinheit ausgebildet ist.

4. System nach einem der Ansprüche 1 bis 3, **dadurch gekennzeichnet, dass** die Transaktionseinheit Bezahlungstransaktionsmittel (38) aufweist, die zum Durchführen einer Bezahlungstransaktion mit dem Betrachter und/oder zur Auslösung oder Freigabe eines nutzungsbeschränkten Datenverarbeitungsbetriebs, insbesondere eines nutzungsbeschränkten Informationswiedergabe- und/oder -Übertragungsbetriebs, ausgebildet ist.

5. System nach einem der Ansprüche 1 bis 4, **dadurch gekennzeichnet, dass** die erste Servereinheit so ausgebildet ist, dass die visuellen Informationen in einem Teilbereich einer Anzeigefläche (24) der Anzeigeeinheit Bildmusterdaten (26), insbesondere in Form eines zweidimensionalen Codierungsmusters, anzeigbar sind, aus denen durch das optische Abtasten die informationsspezifischen Codierungsdaten erzeugbar sind.

6. System nach einem der Ansprüche 1 bis 5, **dadurch gekennzeichnet, dass** den Mitteln zur Identifizierung des Betrachters eine manuell betätigbare Eingabeschnittstelle der mobilen Datenverarbeitungseinheit zugeordnet ist.

7. System nach einem der Ansprüche 1 bis 6, **dadurch gekennzeichnet, dass** die Mittel zur Identifikation des Betrachters auf in einer Datenbankservereinheit (44) gespeicherte Betrachter-Personendaten zugreifen, wobei die Datenbankservereinheit insbesondere Teil einer sozialen Netzwerkinfrastruktur ist.

8. System nach einem der Ansprüche 1 bis 7, **gekennzeichnet durch** der zweiten Servereinheit zugeordnete Aktivitäts- und/oder Transaktionserfassungsmittel, die einem Betätigungs- und/oder Betrachtungsverhalten eines Betrachters entsprechende und/oder für die informationsspezifischen Codierungsdaten zugehörige Profil- und/oder Historiendaten erzeugen.

9. System nach einem der Ansprüche 1 bis 8, **dadurch gekennzeichnet, dass** die zweite Servereinheit zum Ansteuern durch die mobile Datenverarbeitungseinheit ausgebildete Auswahlmittel aufweist, welche zum Zugreifen auf eine serverseitig der zweiten Servereinheit in der Art eines Routing nachgeschaltete weitere Servereinheit (42) ausgebildet ist, die einen benutzerseitigen Zugriff auf ein elektronisches Dokument dieser Servereinheit und eine Darstellung dieses elektronischen Dokuments auf der mobilen Datenverarbeitungseinheit ohne das Übertragen der betrachterindividualisierenden Daten ermöglicht.

10. System nach einem der Ansprüche 1 bis 9, **gekennzeichnet durch** der erstem und/oder der zweiten Servereinheit zugeordnete Lokalisierungsmittel, welche zum Hinzufügen von den informationsspezifischen Codierungsdaten zugehörigen Lokalisierungsdaten, insbesondere betreffend Angebotsorte zugehöriger Informationen, ausgebildet sind.
